# EUROPÄISCHE PATENTSCHRIFT

(11) **EP 1 013 409 B1**
(45) Veröffentlichungstag und Bekanntmachung des Hinweises auf die Patenterteilung: **18.10.2006**
(21) Anmeldenummer: 99124246.2
(22) Anmeldetag: 04.12.1999
(51) Int. Cl.: B29C 70/44

(54) **Verfahren und Vorrichtung zum Herstellen von Formkörpern aus Faserverbundwerkstoffen**
Method and apparatus for manufacturing fibre reinforced composite parts
Procédé et dispositif pour la fabrication des pièces en matières composites renforcées par des fibres

(30) Priorität: 23.12.1998 DE 19859798
(43) Veröffentlichungstag der Anmeldung: 28.06.2000
(73) Patentinhaber: Deutsches Zentrum für Luft- und Raumfahrt e.V., 51147 Köln (DE); Invent GmbH, 38100 Braunschweig (DE)
(72) Erfinder: Herrmann, Axel, Dr.-Ing., 31228 Peine (DE); Pabsch, Arno, Ing., 38120 Braunschweig (DE); Kleffmann, Jens, Dipl.-Ing., 38104 Braunschweig (DE); Schubert, Bernd, Dipl.-Ing., 38104 Braunschweig (DE)
(74) Vertreter: Rehberg Hüppe + Partner

(56) Entgegenhaltungen:
- EP-A- 0 491 646
- FR-A- 2 673 571
- GB-A- 1 181 383

## Beschreibung

Die Erfindung bezieht sich auf ein Verfahren zum Herstellen von Formkörpern aus Faserverbundwerkstoffen bei dem
- eine Fasermatte auf eine steife Negativform aufgebracht wird;
- die Negativform kontinuierlich beheizt und auf einer Temperatur knapp oberhalb einer Aushärtetemperatur für das Harz gehalten wird;
- die Fasermatte mit einer flexiblen Membran abgedeckt wird;
- die Membran gegenüber der Negativform um die Fasermatte umlaufend abgedichtet wird;
- der derart abgedichtete Zwischenraum zwischen der Negativform und der Membran evakuiert wird und auf der der Negativform abgekehrten Rückseite der Membran ein statischer Überdruck aufgebracht wird;
- in den Zwischenraum zwischen der Negativform und der Membran eine Menge flüssigen Harzes mit einem Injektionsdruck (pi) injiziert wird, der größer ist als der Überdruck (PBeh) auf der Rückseite der Membran;
- das Harz durch die beheizte Negativform unter Einwirkung des Überdrucks auf der Rückseite der Membran erwärmt und zumindest teilweise ausgehärtet wird;
- der Überdruck auf der Rückseite der Membran abgelassen wird; und
- der Formkörper mit der in das zumindest teilweise ausgehärtete Harz eingebetteten Fasermatte entformt wird.

Weiterhin bezieht sich die Erfindung auf eine Vorrichtung zur Durführung eines solchen Verfahrens nach dem Oberbegriff des Anspruchs 5.

Faserverbundwerkstoffe bestehen aus einer Fasermatte, die in in eine Matrix aus Harz, üblicherweise Kunstharz, eingebettet ist. Die Fasermatte kann unterschiedlichen Aufbau aufweisen und beispielsweise aus einzelnen parallel verlaufenden Fasern aber auch aus Fasergeweben bestehen. Bei den Fasern kann es sich beispielsweise um Kohlefasern handeln.

Die Herstellung von Formkörpern aus Faserverbundwerkstoffen ist recht aufwendig. Dabei besteht eine Schwierigkeit darin, die gleichmäßige Einbettung der Fasern in das Harz zu erreichen, bevor das Harz ausgehärtet wird.

Beim sogenannten PREPREG-Verfahren werden dünne Lagen von in teilausgehärtetem Harz eingebetteten Fasern laminiert, bis eine Vorform des Formkörpers entstanden ist. Anschließend wird diese Vorform unter mechanischem Druck bei gleichzeitiger Einwirkung eines Vakuums zum Abziehen von Luftblasen aus der Vorform durch Erwärmen ausgehärtet. Dies geschieht typischerweise in einem Autoklaven, in dem die Vorform auf einer Negativform aufliegt und von einer flexiblen Membran abgedeckt wird. Die flexible Membran ist gegenüber der Negativform abgedichtet. Dabei ist zwischen der Vorform der Membran noch eine Schicht aus Gewebematerial angeordnet, die zum Aufnehmen von überschüssigem Harz und zur Ausbildung einer Vakuumzone, des sogenannten Vakuumsacks, dient. Der Bereich des Vakuumsacks ist an eine Vakuumquelle anschließbar.

Bei einem weiteren bekannten Verfahren, das als RTM-Technik bekannt ist, wird Fasermaterial zwischen zwei steifen Formhälften angeordnet, die gegeneinander abgedichtet sind. Dann wird von der einen Seite her der Zwischenraum zwischen den beiden Formhälften evakuiert. Von der anderen Seite her wird flüssiges Harz in den Zwischenraum injiziert. Das injizierte Harz wird von der Druckdifferenz zwischen dem Injektionsdruck des Harzes selbst und dem Unterdruck in dem Zwischenraum durch die Fasermatte hindurchgezogen. Dabei besteht die Gefahr, daß das Harz an seiner zu dem Unterdruckbereich hin gewandten Fließfront aufschäumt und dadurch zu porösen Formkörpern führt. Die Zykluszeiten beim RTM-Verfahren sind daher sehr lang. Hinzukommt ein hoher Aufwand für die Werkzeuge.

Aus "Das DP-RTM-Verfahren, eine Fertigungstechnologie zur wirtschaftlichen Herstellung hochwertiger Faserverbundbauteile", Vortrag auf der 27. AVK-Tagung Baden-Baden Oktober 1996, ist ein Verfahren zum Herstellen von Formkörpern aus Faserverbundwerkstoffen bekannt, bei dem eine Fasermatte auf eine steife Negativform aufgebracht wird. Anschließend wird die Fasermatte mit einer flexiblen Membran abgedeckt, wobei die Membran gegenüber der Negativform um die Fasermatte umlaufend abgedichtet wird. Dann wird die Negativform mit der Fasermatte und der Membran in einen Autoklaven eingebracht. In dem Autoklaven wird der abgedichtete Zwischenraum zwischen der Negativform und der Membran zunächst evakuiert. Anschließend wird an einem dem Abzug aus dem Zwischenraum abgekehrten Punkt flüssiges Harz in den Zwischenraum zwischen der Negativform und der Membran injiziert. Dabei wird ein Injektionsdruck eingehalten, der geringer ist als der auf der Rückseite der Membran wirkende Überdruck in dem Autoklaven. Das Harz bewegt sich auch hier durch die Druckdifferenz zwischen dem Injektionsdruck und dem Unterdruck in dem Zwischenraum durch die Fasermatte um diese in das Harz einzubetten. Dabei weist der Zwischenraum zwischen der Negativform und der flexiblen Membran an der Fließfront des Harzes keinen nennenswerten freien Querschnitt aufweist, so daß ein Aufschäumen des Harzes verhindert wird. Gleichzeitig wird durch die auf die Fasermatte gedrückte Membran eine Fixierung der Fasermatte gegenüber der Negativform erreicht. Insgesamt werden bei dem DP-RTM-Verfahren zwar höhere Produktqualitäten erzielt und es sind geringere Aufwendungen für das Werkzeug erforderlich; der Zeitbedarf ist gegenüber dem herkömmlichen RTM-Verfahren jedoch nicht prinzipiell reduziert.

Ein Verfahren der oben beschriebenen Art und eine Vorrichtung nach dem Oberbegriff des Anspruchs 5 sind aus der EP-A-0491646 bekannt.

Der Erfindung liegt die Aufgabe zugrunde, die Taktzeiten beim Herstellen von Formkörpern aus Faserverbundwerkstoffen zu reduzieren.

Erfindungsgemäß wird diese Aufgabe durch ein Verfahren mit den Merkmalen des Anspruchs 1 gelöst. Die erfindungsgemäße Vorrichtung weist die Merkmale des Anspruchs 5 auf. Vorteilhafte Ausführungsformen sind in den Unteransprüchen 2 bis 4 bzw. 6 bis 9 beschrieben.

Bei dem neuen Verfahren wird das flüssige Harz in den Zwischenraum zwischen der Negativform und der Membran mit einem Injektionsdruck injizierte, der größer ist als der Überdruck auf der Rückseite der Membran. Dadurch kann das Harz schnell in diesen Zwischenraum eingebracht werden. Die Einbringzeit wird nicht durch die Fließgeschwindigkeit des Harzes durch die Fasermatte beschränkt. Vielmehr kann das Harz in den Zwischenraum eintreten, indem es sich zunächst oberhalb der Fasermatte verteilt. Durch den dort über die flexible Membran wirkenden Druck von der Rückseite der Membran her wird das Harz lateral in die Fasermatte eingedrückt. Die Benetzung der Fasermatte durch das Harz erfolgt dabei nicht über einen vergleichsweise kleinen Querschnitt der Fasermatte sondern quasi über deren gesamte Fläche. Das Einbetten der Fasermatte in das Harz nimmt entsprechend nur relativ kurze Zeit in Anspruch.

Die erfindungsgemäße Vorrichtung schafft die Voraussetzung für die Durchführung des neuen Verfahrens.

Zur Steigerung der Produktionsgeschwindigkeit des neuen verfahrens wird die Negativform dauerhaft beheizt, das heißt auf einer Temperatur knapp oberhalb der gewünschten Aushärtetemperatur für das Harz gehalten. Die gewünschte Temperaturführung für das Harz stellt sich dann durch den Temperaturgradient über den Zwischenraum zwischen der Negativform und der unbeheizten Membran und den Fließweg des Harzes ein. Das Harz gelangt erst dann in direkten Wärmekontakt mit der heißen Negativform, wenn es die Fasermatte bereits benetzt hat.

Bei den wichtigsten Ausführungsformen des neuen Verfahrens wird nicht die gesamte Negativform mit der diese abdeckenden Membran auf der Rückseite unter Unterdruck gesetzt, wie dies in einem Autoklaven der Fall ist. Vielmehr wird die Membran an der Stirnseite eines geschlossenen Stützrings angeordnet, der abdichtend gegen die Negativform gepreßt wird. Der Stützring ist dabei Teil eines Überdruckraums auf der Rückseite der Membran, der lokal unter Überdruck setzbar ist, um den gewünschten statischen Überdruck auf der Rückseite der Faserplatte aufzubauen. Zum Aufbau des Überdrucks kann ein Gas und/oder eine Flüssigkeit eingesetzt werden.

Die Abdichtung zwischen der Membran und dem Stützring einerseits und der Negativform andererseits kann dadurch gefördert werden, daß der Stützring mit der Membran in eine umlaufende Nut in der Negativform gepreßt wird. Dabei ist auch zu berücksichtigen, daß in dem Zwischenraum zwischen der Negativform und der Membran bei dem neuen Verfahren ein Vakuum oder doch zumindest ein erheblicher Unterdruck von typischerweise maximal 1 Hektopascal aufgebracht werden soll.

Um die Taktzeiten bei der Durchführung des neuen Verfahrens weiter zu steigern, kann beim Aufheizen der Negativform das Harz im Zulauf zu dem Zwischenraum zwischen der Negativform und der Membran gekühlt werden. Hierdurch wird verhindert, daß das Harz in diesem Bereich aushärtet und eine aufwendige Reinigung des Zulaufs zwischen der Herstellung von zwei Formkörpern erfolgen muß. Derartige Maßnahmen sind grundsätzlich als Kaltangußtechnik in der Duromerspritzguß-Technologie bekannt. Sie sind hier auch auf das Harz im Abzug zum Evakuieren des Zwischenraums zwischen der Negativform und der Membran anwendbar, das beim Aushärten des Formkörpers ebenfalls gekühlt werden sollte.

Die Kühlung kann ganz konkret erreicht werden, in dem mindestens ein Ventil im Zulauf zu dem Zwischenraum zwischen der Negativform und der Membran bzw. in dem Abzug zum Evakuieren des Zwischenraums zwischen der Negativform und der Membran durch ein Kühlmedium geschaltet wird. Das Kühlmedium dient dabei also einerseits zum Schalten des Ventils und andererseits zum Kühlen des Harzes in dem Ventil, um dieses flüssig zu halten. Das Aushärten des Harzes in dem Ventil wäre besonders unerwünscht, weil damit sehr aufwendige Reinigungsarbeiten zwischen der Herstellung von zwei einzelnen Formkörpern verbunden wären.

Vorzugsweise wird bei dem neuen Verfahren auch die Membran beim Aufheizen der Negativform auf ihrer Rückseite gekühlt, um Beschädigung der Membran durch Hitzeeinfluß zu vermeiden. Die Kühlung kann beispielsweise dadurch erfolgen, daß eine Kühleinrichtung für die Rückseite der Membran vorgesehen wird, die eine Umwälzeinrichtung für das Druckmedium in dem Druckraum aufweist. Das Druckmedium in dem Druckraum hat damit auch eine Doppelfunktion und zwar einerseits den Aufbau des statischen Drucks auf der Rückseite der Membran und andererseits die Kühlung der Rückseite der Membran.

Die Erfindung wird im folgenden anhand von Ausführungsbeispielen näher erläutert und beschrieben. Dabei zeigt:
- Figur 1: eine Vorrichtung zur Durchführung des neuen Verfahrens in einer Offenstellung,
- Figur 2: die Vorrichtung gemäß Figur 1 in einer Geschlossenstellung,
- Figur 3: den Schaltplan der Vorrichtung gemäß den Figuren 1 und 2 und
- Figur 4: ein Injektionsventil der Vorrichtung gemäß den Figuren 1 bis 3 in einer Geschlossenstellung und
- Figur 5: das Injektionsventil gemäß Figur 4 in einer Offenstellung.

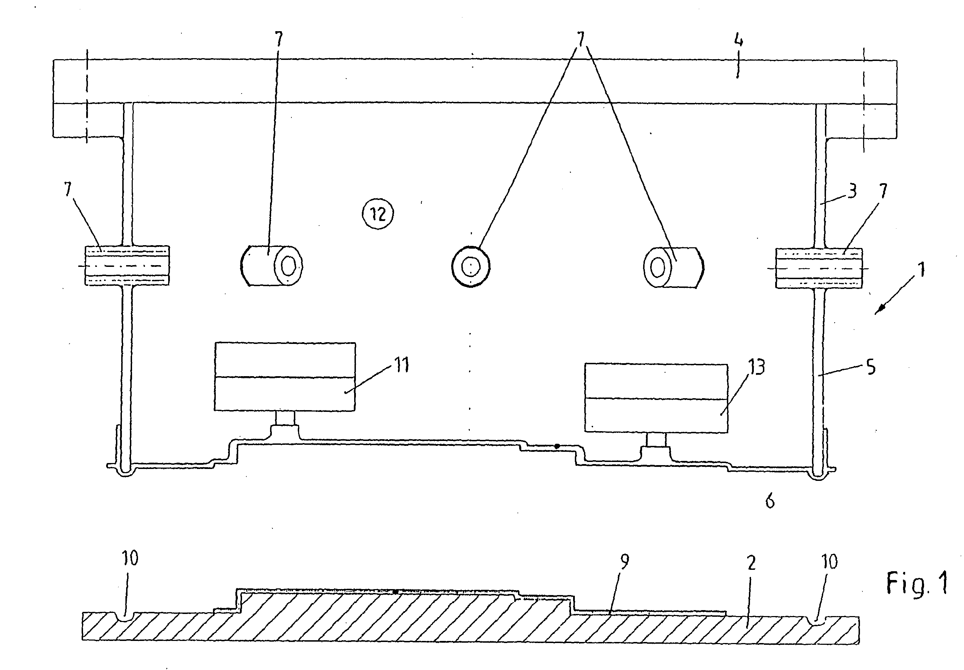

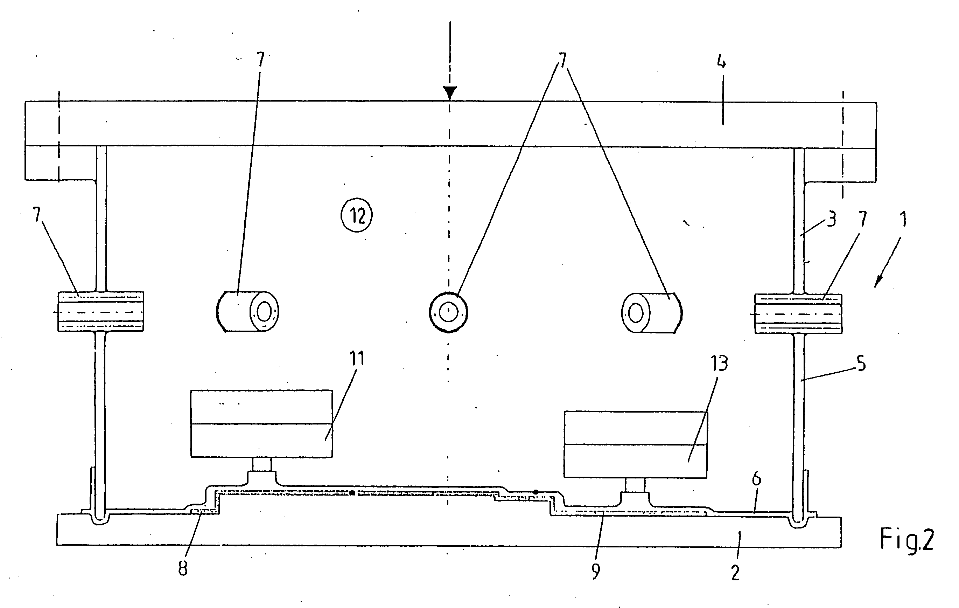

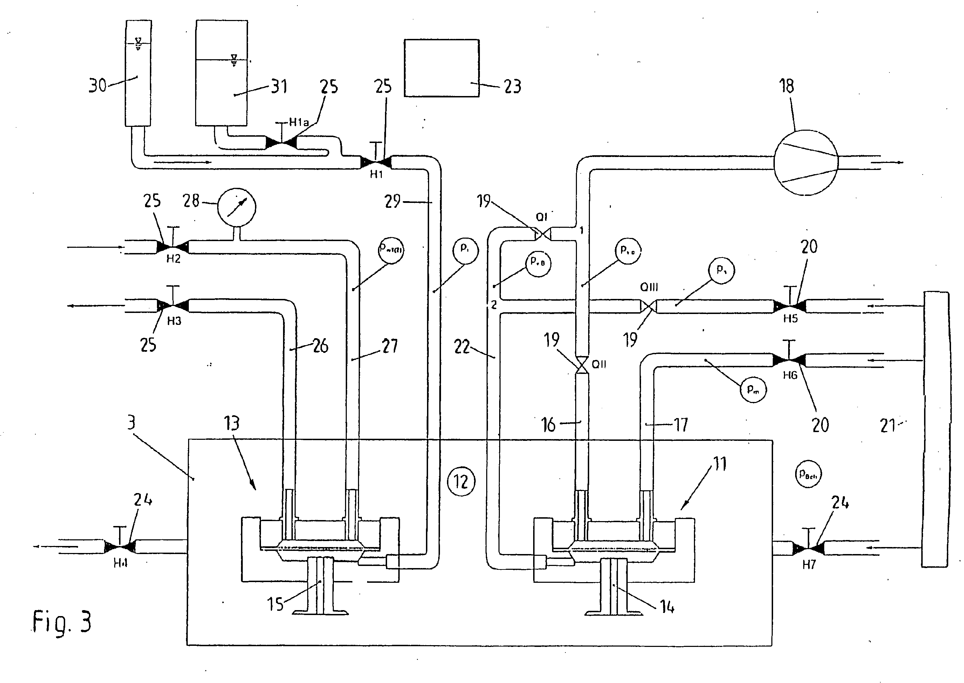

Bei der in den Figuren 1 und 2 in zwei verschiedenen Stellungen gezeigten Vorrichtung handelt es sich um ein Werkzeug 1 zur Verwendung in einer Kunststoffspritzgußpresse. Das Werkzeug 1 ist zweiteilig. Der untere Teil ist eine steife Negativform 2, die hier aus Aluminium ausgebildet ist und die durch eine an der Kunststoffspritzgußpresse angeordnete Heizung aufheizbar ist. Der obere Teil ist eine Druckglocke 3. Nach oben wird die Druckglocke 3 durch einen massiven, steifen Deckel 4 abgeschlossen. Seitlich wird die Druckglocke 3 durch einen ebenfalls steifen Stützring 5 begrenzt. An der unteren Stirnseite des Stützrings 5 ist eine flexible Membran 6 angeordnet, die die Druckglocke 3 nach unten abschließt. In dem Stützring 3 sind verschiedene Durchführungen 7 für hier nicht dargestellte Versorgungsleitungen vorgesehen. Hierauf wird im Zusammenhang mit Figur 3 näher eingegangen werden. Die Membran 6 weist eine der Negativform 2 entsprechende Gestalt auf, wobei zwischen der Membran 6 und der Negativform 2 in der Geschlossenstellung des Werkzeugs 1 gemäß Figur 2 ein Zwischenraum 8 verbleibt, der der gewünschten Form eines mit dem Werkzeug 1 herzustellenden Formkörpers aus Verbundwerkstoff entspricht.

Zur Herstellung des Formkörpers wird zunächst eine Fasermatte 9 auf die kontinuierlich beheizte Negativform 2 aufgebracht. Dann wird das Werkzeug 1 geschlossen, indem die Druckglocke 3 auf die Negativform 2 abgesenkt wird. Dabei greift der Stützring 3 stirnseitig mit der Membran 6 in eine umlaufende Nut 10 in der Negativform 2 ein. Hierdurch wird der Zwischenraum 8 seitlich abgedichtet. Anschließend wird der Zwischenraum 8 über ein Vakuumventil 11 mit einer hier nicht dargestellten Vakuumquelle außerhalb der Druckglocke 3 verbunden und evakuiert. Gleichzeitig wird der von der Druckglocke 3 umschlossenen Druckraum 12 mit einem Druck p_{Beh} beaufschlagt. Dieser Druck kann beispielsweise 6000 Hektopascal betragen. Es versteht sich, daß mit der Kunststoffspritzgußpresse, in der das Werkzeug 1 angeordnet ist, eine Pressenkraft aufgebracht wird, die trotz des Überdrucks in dem Druckraum 12 ein Auseinanderdrücken der Negativform 2 und der Druckglocke 3 verhindert. Das Vakuum im Bereich der durch den Überdruck in dem Druckraum 12 über die flexible Membran 6 verdichteten Fasermatte 9, d. h. in dem Zwischenraum 8, ist typischerweise kleiner als 1 Hektopascal. Wenn dieses Vakuum erreicht ist, wird flüssiges Harz über ein Injektionsventil 13 von einem hier nicht dargestellten Harzdruckspeicher in den Zwischenraum 8 injiziert. Dabei ist der Injektionsdruck pᵢ größer als der Überdruck p_{Beh} in dem Druckraum 12. Entsprechend dringt beim Injizieren des flüssigen Harzes das Harz nicht allein in die Fasermatte ein, sondern ordnet sich zu großen Teilen unter Anhebung der Membran 6 oberhalb der Fasermatte an. Es wird dann jedoch anschließend durch den Überdruck in dem Druckraum 12 seitlich in die zuvor evakuierte Fasermatte eingedrückt. Insgesamt erfolgt das Einbetten der Fasermatte 9 in das flüssige Harz damit binnen relativ kurzer Zeit. In den Figuren 1 und 2 ist jeweils nur ein Injektionsventil 13 dargestellt. Zur Beschleunigung der Imprägnierung der Fasermatte 9 mit dem flüssigen Harz können auch mehrere Injektionsventile 13 vorhanden sein. Ebenso können mehrere Vakuumventile 11 vorgesehen sein. Unmittelbar im Anschluß an die Einbettung der Fasermatte 9 in das Harz erfolgt die Gelier- und Härtephase des Harzes. Sobald der neue Formkörper soweit ausgehärtet ist, daß er formstabil ist, kann der Überdruck aus dem Druckraum 12 abgelassen und das Werkzeug 1 geöffnet werden, um den Formkörper zu entformen. Anschließend kann noch eine Nachhärtung des Formkörpers unter Wärmeeinwirkung vorgenommen werden. Dies ist beispielsweise durch einen Durchlauf durch einen Tunnelofen realisierbar. Der Vorgang der Herstellung des Formkörpers in dem Werkzeug 1 kann in 5 bis 10 min. abgeschlossen sein. Damit ist eine kommerziell interessante Serienfertigung möglich.

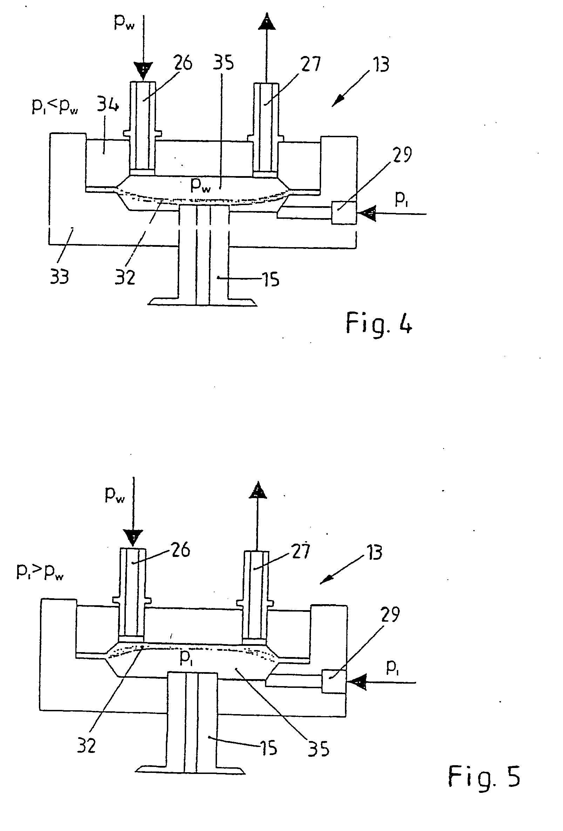

Aus dem Schaltplan gemäß Figur 3 gehen weitere Details der neuen Vorrichtung hervor. Dabei ist schematisch die Druckglocke 3 mit dem Vakuumventil 11 und den Injektionsventilen 13 zusammen mit den hierzu gehörigen Versorgungsleitungen wiedergegeben. Die dabei zu dem Vakuumventil 11 und dem Injektionsventil 13 erkennbaren Details werden im Zusammenhang mit den Figuren 4 und 5 noch näher erläutert werden. Hier sei nur angeführt, daß ein Vakuumdom 14 des Vakuumventils 11 und ein Injektionsdom 15 des Injektionsventils 13 durch die hier nicht dargestellte Membran 6 in den Zwischenraum 8 zwischen der Membran 6 und der Negativform 2 bei geschlossenem Werkzeug 1 führen (vgl. Fig. 2). Das Vakuumventil 11 wird durch den Differenzdruck zwischen zwei Steuerleitungen 16 und 17 geschaltet. Wenn das Vakuumventil 11 geöffnet ist, wird über eine Absaugleitung 22 durch den Vakuumdom 14 zu einer Vakuumpumpe 18 hin abgesaugt. Die Drucksteuerung erfolgt dabei unter Verwendung mehrerer Schlauchquetschen 19 und von zwei einstellbaren Ventilen 20, die zu einer Druckluftquelle 21 führen. Zum Schließen des Vakuumventils wird das mit H6 bezeichnete Ventil 20 geöffnet, so daß über die Steuerleitung 17 ein Druck pₘ auf das Vakuumventil 11 einwirkt. Dabei ist die mit QII bezeichnete Schlauchquetsche 19 von der Steuerleitung 16 zur Vakuumpumpe 18 hin teilweise geschlossen, so daß der Schließdruck pₘ nicht zusammenbricht, aber noch etwas Druckluft durch das Vakuumventil 11 zirkuliert. Diese Druckluft dient zur Kühlung des Vakuumventils beispielsweise zum Aushärten des Harzes des gewünschten Formkörpers. Durch diese Kühlung wird verhindert, daß in das Vakuumventil eingedrungenes Harz in dem Vakuumventil 11 aushärtet. Zum Öffnen des Vakuumventils wird das mit H6 bezeichnete Steuerventil ganz oder teilweise geschlossen und die mit QII bezeichnete Schlauchquetsche 19 geöffnet. Gleichzeitig wird die mit QI bezeichnete Schlauchquetsche 19 geöffnet, die die von dem Vakuumdom 14 zu der Vakuumpumpe 18 führende Absaugleitung 22 freigibt. Dabei wird mit der mit QI bezeichneten Schlauchquetsche 19 ein Druck p_{v,B} in der Absaugleitung 22 eingestellt, der in bestimmter Relation zu einem Druck p_{v,B} in der Steuerleitung 16 steht, um das Vakuumventil 11 beim Absaugen zuverlässig offen zu halten. Mit Hilfe des mit H5 bezeichneten Ventils 20 und der mit QIII bezeichneten Schlauchquetsche 19 kann ein Ausblasdruck pₐ auf das Vakuumventil 11 aufgebracht werden, um in den Vakuumdom 14 eingedrungenes Harz wieder auszublasen. Alle Befehle zum Öffnen und Schließen der Schlauchquetschen 19 und der Ventile 20 kommen von einer Ablaufsteuereinrichtung 23. Die Ablaufsteuereinrichtung 23 steuert auch zwei mit H4 und H7 bezeichnete Ventile 24 zur Steuerung des Überdrucks in dem Druckraum 12 in der Druckglocke 3. Das mit H7 bezeichnete Ventil 24 dient zum Verbinden des Druckraums 12 mit der Druckluftquelle 21. Das mit H4 bezeichnete Ventil 24 dient zum Ablassen von Druckluft aus dem Druckraum 12. Dabei kann auch bei aufgebautem Druck ein konstanter Luftstrom durch den Druckraum 12 erfolgen, um beispielsweise die Rückseite der Membran 6 beim Aushärten des Harzes zu kühlen. Weiterhin steuert die Ablaufsteuereinrichtung 23 das Injektionsventil 13. Dem Injektionsventil 13 sind Ventile 25 zugeordnet. Mit dem mit H2 bezeichneten Ventil 25 wird dem Injektionsventil 13 Kühlwasser über eine Steuerleitung 27 zugeführt. Das Kühlwasser läuft über eine Steuerleitung 26 wieder ab, wobei im Wasser-Rücklauf das mit H3 bezeichnete Ventil 25 angeordnet ist. Der Wasserdruck im Wasser-Vorlauf wird durch ein Manometer 28 für die Ablaufsteuereinrichtung 23 registriert. Der Druck p_{w1(2)} in der Steuerleitung 27 bestimmt, wann das Injektionsventil 13 bei einem Druck pᵢ in einer Injektionsleitung 29 öffnet, in die ein Harzdruckspeicher 30 flüssiges Harz einspeist. Dabei ist zur Einstellung von pᵢ das mit H1 bezeichnete Ventil 25 vorgesehen. Der Harzdruckspeicher 30 nimmt die Harzmenge für die Herstellung genau eines Formkörpers aus Faserverbundwerkstoff auf. Ein Harzspeicher 31, der über das mit H1a bezeichnete Ventil 25 zugänglich ist, beinhaltet den Gesamtvorrat an flüssigem Harz.

Das in den Figuren 4 und 5 separat dargestellte Injektionsventil 13 weist im Prinzip denselben Aufbau wie das Vakuumventil 11 auf. Dieser Aufbau erlaubt eine Doppelfunktion eines Schaltventils und einer Kühlung für in dem Ventil befindliches flüssiges Harz beim Aushärten des jeweiligen Formkörpers. Dabei wird das zirkulierende Kühlmedium, bei dem es sich im Fall des Injektionsventils 13 um Kühlwasser handelt, gleichzeitig zur Steuerung des Ventils genutzt. Schaltelement des Injektionsventils 13 ist eine Ventilmembran 32, die von oben mit dem Kühlwasser beaufschlagt wird und von diesem auf den oberen Zugang des Injektionsdoms 15 gedrückt werden kann, um diesen zu verschließen. In Figur 4 ist die geschlossene Stellung des Injektionsdoms 15 gezeigt, wobei die Ventilmembran 32 seinen oberen Zugang verschließt. Dabei ist der Druck p_{w} oberhalb der Membran größer als der Druck pᵢ in der Injektionsleitung 29. Wenn sich das Verhältnis umkehrt und der Druck p_{w} kleiner ist als pᵢ, öffnet das Injektionsventil, indem die Ventilmembran 32 von dem injizierten flüssigen Harz angehoben wird und den oberen Zugang des Injektionsdoms 15 freigibt. Dennoch kann das Kühlwasser über die Steuerleitungen 26 und 27 weiterhin oberhalb der Membran zirkulieren. Dadurch, daß die Ventilmembran 32 in beiden Stellungen gemäß den Figuren 4 und 5 zum Teil eine steife Abstützung durch das Ventilgehäuse bzw. den oberen Abschluß des Injektionsdoms 15 erfährt, wird ein Flattern der Ventilmembran 32 in dem Druckbereich verhindert, in dem pᵢ ungefähr genauso groß ist wir p_{w}. Das Injektionsventil 13 zeichnet sich durch einen besonders einfachen Aufbau aus. Es besteht neben dem Injektionsdom 15 nur aus einem Gehäuseunterteil 33 und einem Gehäuseoberteil 34, zwischen denen die Ventilmembran 32 eingeklemmt ist. In den Innenraum 35 des Injektionsventils 13, in dem sich die Ventilmembran 32 auf uns ab bewegt, ragt der Injektionsdom 15 mittig von unten hinein. Die Steuerleitungen 26 und 27 münden in den Innenraum 35 von oben und zwar jeweils im Randbereich des Innenraums 35, in dem ein freier Ringraum auch bei geöffnetem Injektionsventil 13 verbleibt.

### BEZUGSZEICHENLISTE

- 1 -: Werkzeug
- 2 -: Negativform
- 3 -: Stützring
- 4 -: Deckel
- 5 -: Stützring
- 6 -: Membran
- 7 -: Durchführungen
- 8 -: Zwischenraum
- 9 -: Fasermatte
- 10 -: Nut

- 11 -: Vakuumventil
- 12 -: Druckraum
- 13 -: Injektionsventil
- 14 -: Vakuumdom
- 15 -: Injektionsdom
- 16 -: Steuerleitung
- 17 -: Steuerleitung
- 18 -: Vakuumpumpe
- 19 -: Schlauchquetsche
- 20 -: Ventil

- 21 -: Druckluftquelle
- 22 -: Absaugleitung
- 23 -: Ablaufsteuereinrichtung
- 24 -: Ventil
- 25 -: Ventil
- 26 -: Steuerleitung
- 27 -: Steuerleitung
- 28 -: Manometer
- 29 -: Injektionsleitung
- 30 -: Harzdruckspeicher
- 31 -: Harzspeicher
- 32 -: Ventilmembran
- 33 -: Gehäuseunterteil
- 34 -: Gehäuseoberteil
- 35 -: Innenraum

## Patentansprüche

1. Verfahren zum Herstellen von Formkörpern aus Faserverbundwerkstoffen, bei dem
- eine Fasermatte (9) auf eine steife Negativform (2) aufgebracht wird;
- die Negativform (2) kontinuierlich beheizt und auf einer Temperatur knapp oberhalb einer Aushärtetemperatur für ein Harz gehalten wird;
- die Fasermatte (9) mit einer flexiblen Membran (6) abgedeckt wird;
- die Membran (6) gegenüber der Negativform (2) um die Fasermatte (9) umlaufend abgedichtet wird;
- der derart abgedichtete Zwischenraum (8) zwischen der Negativform (2) und der Membran (6) evakuiert wird und auf der der Negativform (2) abgekehrten Rückseite der Membran (6) ein statischer Überdruck aufgebracht wird;
- in den Zwischenraum (8) zwischen der beheizten Negativform (2) und der Membran (6) eine Menge des flüssigen Harzes mit einem Injektionsdruck (pi) injiziert wird, der größer ist als der Überdruck (p_{Beh}) auf der Rückseite der Membran (6);
- für die Temperaturführung des Harzes ein Temperaturgradient über den Zwischenraum (8) zwischen der Negativform (2) und der Membran (6) sowie den Fließweg des Harzes sich einstellt.
- das Harz durch die beheizte Negativform (2) unter Einwirkung des Überdrucks auf der Rückseite der Membran (6) erwärmt und zumindest teilweise ausgehärtet wird;
- der Überdruck auf der Rückseite der Membran (6) abgelassen wird; und
- der Formkörper mit der in das zumindest teilweise ausgehärtete Harz eingebetteten Fasermatte (9) entformt wird,

2. Verfahren nach Anspruch 1, **dadurch gekennzeichnet, dass** die Membran (6) gegenüber der Negativform (2) um die Fasermatte (9) umlaufend abgedichtet wird, indem die Membran (6) an der Stirnseite eines geschlossenen Stützrings (5) angeordnet und der Stützring (5) in eine umlaufende Nut (10) in der Negativform (2) gepresst wird.

3. Verfahren nach Anspruch 1 oder 2, **dadurch gekennzeichnet, dass** der Stützring (5) zur Ausbildung eines Druckraums (12) auf der Rückseite der Membran (6) verwendet wird.

4. Verfahren nach einem der Ansprüche 1 bis 3, **dadurch gekennzeichnet, dass** der Überdruck (p_{Beh}) auf der Rückseite der Membran (6) als Luftdruck aufgebracht wird.

5. Vorrichtung zum Herstellen von Formkörpern aus Faserverbundwerkstoffen nach dem Verfahren nach einem der Ansprüche 1 bis 4, mit
- einer steifen Negativform (2);
- einer auf die Negativform (2) absenkbaren flexiblen Membran (6) zum Abdichten eines Zwischenraum (8) zwischen der Negativform (2) und der Membran (6);
- mindestens einer in den Zwischenraum (8) zwischen der Negativform (2) und der Membran (6) mündenden Absaugleitung (22);
- einer mit der Absaugleitung (22) verbindbaren Vakuumpumpe (18);
- einem Druckraum (12) auf der der Negativform (2) abgekehrten Rückseite der Membran (6);
- einer mit dem Druckraum (12) verbindbaren Überdruckquelle (21);
- mindestens einer in den Zwischenraum (8) zwischen der Negativform (2) und der Membran (6) mündenden Injektionsleitung (29);
- einem mit der Injektionsleitung (29) verbindbaren Harzdruckspeicher (30), mit dem eine Menge flüssigen Harzes mit einem Injektionsdruck (pᵢ) in den Zwischenraum (8) injizierbar ist, der größer ist als der Überdruck (p_{Beh}) in dem Druckraum (12);
- einem Druckablass für den Druckraum (12);
- eine Heizung für die Negativ form; und
- einer Ablaufsteuereinrichtung (28),
**dadurch gekennzeichnet, dass** knapp eine Kühleinrichtung für die Rückseite der Membran vorgesehen ist.

6. Vorrichtung nach Anspruch 5, **dadurch gekennzeichnet, dass** die Membran (6) an der Stirnseite eines geschlossenen Stützrings (5) angeordnet ist und in der Negativform (2) eine der Stirnseite des Stützrings entsprechende umlaufende Nut (10) vorgesehen ist.

7. Vorrichtung nach Anspruch 6, **dadurch gekennzeichnet, dass** der Stützring (5) Teil einer den Druckraum (12) auf der Rückseite der Membran (6) begrenzenden Druckglocke (3) ist und dass die Überdruckquelle eine Druckluftquelle (21) ist.

8. Vorrichtung nach einem der Ansprüche 5 bis 7, **dadurch gekennzeichnet, dass** eine Kühleinrichtung für das Harz in der Injektionsleitung (29) und eine Kühleinrichtung für das Harz in der Absaugleitung (22) vorgesehen ist, wobei ein Ventil (13/11) in der Injektions- und/oder Absaugleitung angeordnet ist, das durch ein Kühlmedium der entsprechenden Kühleinrichtung schaltbar ist.

9. Vorrichtung nach einem der Ansprüche 5 bis 8, **dadurch gekennzeichnet, dass** die Kühleinrichtung eine Umwälzeinrichtung für das Druckmedium in dem Druckraum aufweist.

## Claims

1. Method for manufacturing shaped bodies of fibre composite materials, wherein
- a fibre mat (9) is applied to a rigid negative mould (2);
- the negative mould (2) is continuously heated and maintained at a temperature slightly above a curing temperature of a resin;
- the fibre mat (9) is covered with a flexible membrane (6);
- the membrane (6) is sealed with regard to the negative mould (2) all around the fibre mat (9);
- the thus sealed intermediate space (8) between the negative mould (2) and the membrane (6) is evacuated, and a static overpressure is applied at the backside of the membrane (6) facing away from the negative mould (2);
- an amount of the liquid resin is injected into the intermediate space (8) between the heated negative mould (2) and the membrane (6) at an injection pressure (pi), which is higher than the overpressure (p_{Beh}) at the backside of the membrane (6);
- a temperature gradient over the intermediate space (8) between the negative mould (2) and the membrane (6) as well as over the flow path of the resin results for the temperature control of the resin;
- the resin is heated up and at least partially cured by the heated negative mould (2) under the influence of the overpressure at the backside of the membrane (6);
- the overpressure at the backside of the membrane (6) is released; and
- the shaped body having a fibre mat (9) embedded in the at least partially cured resin is taken out of the mould.

2. Method of claim 1, **characterized in that** the membrane (6) is sealed with regard, to the negative mould (2) all around the fibre mat (9) **in that** the membrane (6) is arranged at the front face of a closed support ring (5) and that the support ring (5) is pressed into a ring shaped recess (10) in the negative mould (2).

3. Method of claim 1 or 2, **characterized in that** the support ring (5) is used for forming a pressure chamber (12) at the backside of the membrane (6).

4. Method of any of the claims 1 to 3, **characterized in that** the overpressure (p_{Beh}) on the backside of the membrane (6) is applied as an air pressure.

5. Apparatus for manufacturing shaped bodies of fibre composite materials according to the method of any of the claims 1 to 4, comprising:
- a rigid negative mould (2);
- a flexible membrane (6) which can be lowered onto the negative mould (2) for sealing an intermediate space (8) between the negative mould (2) and the membrane (6);
- at least one evacuation line (22) terminating in the intermediate space (8) between the negative mould (2) and the membrane (6);
- a vacuum pump (18) connectable to the evacuation line (22);
- a pressure chamber (12) at the backside of the membrane (6) facing away from the negative mould (2);
- an overpressure source (21) connectable to the pressure chamber (12);
- at least one injection line (29) terminating in the intermediate space (8) between the negative mould (2) and the membrane (6);
- a resin pressure storage (30) connectable to the injection line (29), by which an amount of liquid resin can be injected into the intermediate space (8) at an injection pressure (pi) which is higher than the overpressure (p_{Beh}) in the pressure chamber (12);
- a pressure release for the pressure chamber (12); and
- an operation control unit (28);
**characterized in that** a cooling device is provided for the backside of the membrane.

6. Apparatus of claim 5, **characterized in that** the membrane (6) is arranged at the front face of a closed support ring (5) and that a ring shaped recess (10) is provided in the negative mould (2) which corresponds to the front face of the support ring.

7. Apparatus of claim 6, **characterized in that** the support ring (5) is part of a pressure bell (3) delimiting the pressure chamber (12) at the backside of the membrane (6), and that the overpressure source is a pressurized air source (21).

8. Apparatus of any of the claims 5 to 7, **characterized in that** a cooling device for the resin in the injection line (29) and a cooling device for the resin in the evacuation line (22) are provided, a valve (13/11) being arranged in the injection and/or evacuation line which is switched by a cooling media of the respective cooling device.

9. Apparatus of any of the claims 5 to 8, **characterized in that** the cooling device comprises a circulating device for the pressure media in the pressure chamber.

## Revendications

1. Procédé pour fabriquer des pièces moulées en matériaux composites renforcés de fibres, dans lequel
- une nappe de fibres (9) est déposée sur un moule en creux rigide (2) ;
- le moule en creux (2) est chauffé de façon continue et maintenu à une température juste supérieure à une température de durcissement d'une résine ;
- la nappe de fibres (9) est recouverte d'une membrane souple (6) ;
- un joint étanche est formé entre la membrane (6) et le moule en creux (2) tout autour de la nappe de fibres (9) ;
- l'espace intermédiaire (8) entre le moule en creux (2) et la membrane (6) qui a été ainsi fermé à joint étanche est vidé d'air, et une surpression statique est appliquée à la face arrière de la membrane (6) qui est éloignée du moule en creux (2) ;
- une certaine quantité de la résine liquide est injectée dans l'espace intermédiaire (8) entre le moule en creux (2) et la membrane (6) sous une pression d'injection (pi) qui est plus forte que la surpression (p_{Beh}) régnant sur la face arrière de la membrane (6) ;
- pour le profil de la température de la résine, il s'établit un gradient de température en travers de l'espace intermédiaire (8) entre le moule en creux (2) et la membrane (6) ainsi que le trajet d'écoulement de la résine ;
- la résine est chauffée par le moule en creux (2) chauffé, en même temps que la surpression agit sur la face arrière de la membrane (6) et elle est durcie au moins partiellement ;
- la surpression sur la face arrière de la membrane (6) est relâchée ; et
- la pièce moulée, avec la nappe de fibres (9) noyée dans la résine au moins partiellement durcie est démoulée.

2. Procédé selon la revendication 1, **caractérisé en ce que** la membrane (6) est montée à joint étanche sur le moule en creux (2) tout autour de la nappe de fibres (9), par le fait que la membrane (6) est disposée sur le côté d'extrémité d'un anneau d'appui fermé (5) et l'anneau d'appui (5) est enfoncé dans une gorge périphérique (10) ménagée dans le moule en creux (2).

3. Procédé selon la revendication 1 ou 2, **caractérisé en ce que** l'anneau d'appui (5) est utilisé pour former une chambre de pression (12) sur la face arrière de la membrane (6).

4. Procédé selon une des revendications 1 à 3, **caractérisé en ce que** la surpression (p_{Beh}) sur la face arrière de la membrane (6) est appliquée sous la forme d'une pression d'air.

5. Dispositif pour la fabrication de pièces moulées en matériaux composites renforcés de fibres par le procédé selon une des revendications 1 à 4, comprenant
- un moule en creux rigide (2);
- une membrane flexible (6) qui peut être abaissée sur le moule en creux (2) pour enfermer à joint étanche un espace intermédiaire (8) entre le moule en creux (2) et la membrane (6) ;
- au moins une conduite d'aspiration (22) qui débouche dans l'espace intermédiaire (8) entre le moule en creux (2) et la membrane (6) ;
- une pompe à vide (18) qui peut être reliée à la conduite d'aspiration (22) ;
- une chambre de pression (12) située sur la face arrière de la membrane (6) qui est à l'opposé du moule en creux (2) ;
- une source de surpression (21) qui peut être reliée à la chambre de pression (12) ;
- au moins une conduite d'injection (29) qui débouche dans l'espace intermédiaire (8) entre le moule en creux (2) et la membrane (6) ;
- un accumulateur de pression de résine (30) qui peut être relié à la conduite d'injection (29), au moyen duquel une quantité de résine liquide peut être injectée sous une pression d'injection (pi) dans l'espace intermédiaire (8), pression qui est supérieure à la surpression (p_{Beh}) régnant dans la chambre de pression (12);
- un échappement de pression pour la chambre de pression (12) ; et
- un chauffage pour le moule en creux ;
- un dispositif de commande du déroulement (23),
**caractérisé en ce qu'**un dispositif de refroidissement est prévu pour la face arrière de la membrane.

6. Dispositif selon la revendication 5, **caractérisé en ce que** la membrane (6) est disposée contre un côté d'extrémité d'un anneau d'appui fermé (5) et **en ce que**, dans le moule en creux (2) est prévue une gorge périphérique (10) qui correspond au côté d'extrémité de l'anneau d'appui.

7. Dispositif selon la revendication 6, **caractérisé en ce que** l'anneau d'appui (5) fait partie d'une cloche à pression (3) qui délimite la chambre de pression (12) sur la face arrière de la membrane (6) et **en ce que** la source de surpression est une source d'air comprimé (21).

8. Dispositif selon une des revendications 5 à 7, **caractérisé en ce qu'**il est prévu un dispositif de refroidissement pour la résine dans la conduite d'injection (29) et un dispositif de refroidissement pour la résine située dans la conduite d'aspiration (22), une vanne (13/11) étant disposée dans la conduite d'injection et/ou dans la conduite d'aspiration, vanne qui peut être manoeuvrée par un milieu de refroidissement du dispositif de refroidissement correspondant.

9. Dispositif selon une des revendications 5 à 8, **caractérisé en ce que** le dispositif de refroidissement présente un dispositif de circulation pour le milieu de pression présent dans la chambre de pression.
